# EUROPÄISCHE PATENTANMELDUNG

(11) **EP 4 539 315 A1**
(43) Veröffentlichungstag der Anmeldung: **16.04.2025**
(21) Anmeldenummer: 24204094.7
(22) Anmeldetag: 02.10.2024
(51) Int. Cl.: H02M 1/00, H02M 1/08, H02M 7/5387

(54) **VERFAHREN ZUM BETREIBEN EINES WECHSELRICHTERS**

(30) Priorität: 13.10.2023 DE 102023128067
(71) Anmelder: Kostal Industrie Elektrik GmbH & Co. KG, 58513 Lüdenscheid (DE)
(72) Erfinder: BARTLING, Ralf, Dr., 58730 Fröndenberg (DE)
(74) Vertreter: Kerkmann, Detlef

(57) **Zusammenfassung**

Die Erfindung betrifft ein Verfahren zum Betreiben eines Wechselrichters mit einem Gleichspannungs-Zwischenkreis, zumindest zwei steuerbaren Schaltern, einer Speicherdrossel und einem Filter-Kondensator, zum Einspeisen eines Wechselstroms in ein Wechselstromnetz an einem Einspeisepunkt, das erfindungsgemäß dadurch gekennzeichnet ist, dass die steuerbaren Schalter zur Erzeugung fortlaufender, dreieckförmiger, bei Strom Null beginnender und endender Strompulse des Stroms durch die Speicherdrossel angesteuert werden, welche Strompulse im zeitlichen Mittel am Einspeisepunkt den einzuspeisenden Wechselstrom ergeben.

## Beschreibung

Die Erfindung betrifft ein Verfahren zum Betreiben eines Wechselrichters mit einem Gleichspannungs-Zwischenkreis, zumindest zwei steuerbaren Schaltern, einer Speicherdrossel und einem Filter-Kondensator, zum Einspeisen eines Wechselstroms in ein Wechselstromnetz an einem Einspeisepunkt.

Heutzutage gebräuchliche Verfahren zum Betreiben eines Wechselrichters basieren darauf, einen Strom in einer Speicherdrossel zu regeln. Dieser Strom wird mit Hilfe eines Filterkondensators geglättet und fließt dann in ein Wechselstromnetz. Der Strom wird dabei mithilfe einer Pulsweitenmodulation (PWM) bestmöglich auf einen Sollwert eingeregelt. Durch die Schaltvorgänge im Wechselrichter stellt sich eine taktfrequente Welligkeit im realen Strom der Speicherdrossel ein, die dem ins Netz fließenden Strom überlagert ist. Die Taktfrequenzen der PWM liegen dabei im Bereich von 10 bis 100kHz, und sind damit sehr viel höher als die Grundfrequenz des zu erzeugenden Wechselstroms von z.B. 50Hz für Europa oder 60 Hz für USA.

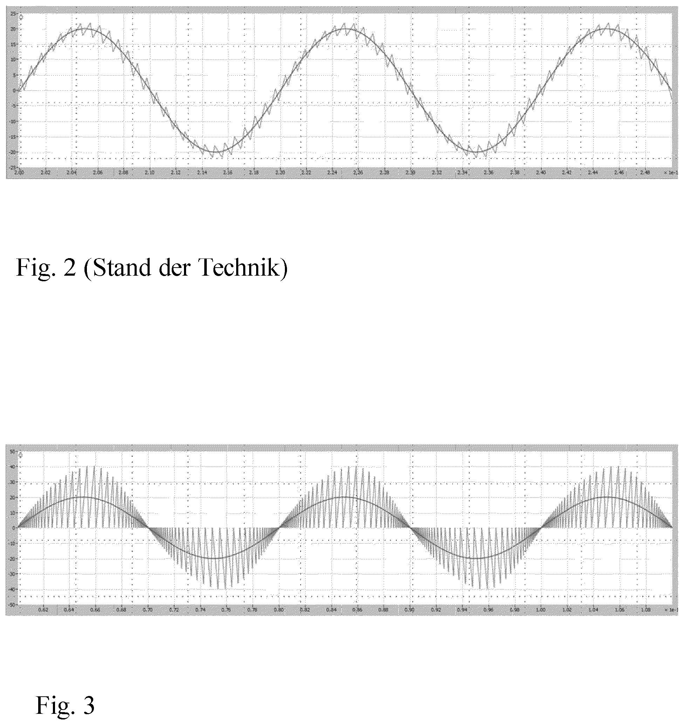

In der Speicherdrossel stellt sich in diesem Betrieb ein kontinuierlich fließender Strom ein, es gibt also keine Zeiten, in denen die Speicherdrossel stromlos ist, außer im Nulldurchgang der Grundfrequenz. Damit wirkt die Speicherdrossel als Integrator zwischen der vom Wechselrichter eingeprägten Spannung und dem jeweiligen Augenblickswert der Netzspannung. Der Verlauf des Stromes bei diesem bekannten Verfahren ist in Fig. 2 schematisch veranschaulicht, wobei der Sollwert des Stroms durch die glatte, sinusförmige Kurve und der Istwert durch die um diesen Sollwert herum pendelnde gezackte Linie dargestellt ist. Diese Darstellung zeigt allerdings lediglich die prinzipiellen Verläufe, da die realen Taktfrequenzen, wie zuvor bereits gesagt, mit 10 bis 100kHz sehr viel hochfrequenter im Vergleich zur Grundwelle (z.B. 50Hz) sind, als hier dargestellt. Die Integrator-Eigenschaft der Speicherdrossel erfordert zwingend einen geschlossenen Regelkreis, in dem der Strom in der Speicherdrossel gemessen und von einem Mikrocontroller oder einem digitalen Signalprozessor (DSP) in geeigneter Weise geregelt wird. Andernfalls würde der Strom in der Speicherdrossel schnell "wegintegrieren" und nicht mehr beherrschbar sein.

Diese bekannten Verfahren zum Betrieb eines Wechselrichters bringen einige Herausforderungen mit sich. So ist die Induktivität der Speicherdrossel auf die Taktfrequenz des Wechselrichters abzustimmen. Ziel ist es dabei, mit Speicherdrosseln möglichst kleiner Induktivität auszukommen, da die Größe und der Preis der Speicherdrosseln mit der Induktivität wachsen und diese damit einen hohen Anteil an Kosten und Volumen im Gesamtgerät haben.

Ein weiterer Aspekt ist der erforderliche, geschlossene Regelkreis. Aktuelle Regelstrategien sind als komplexe Zustandsregler ausgeführt, welche vom Mikrocontroller/DSP in Echtzeit abzuarbeiten sind. Dabei muss für jeden Takt der Istwert gemessen, der Regelalgorithmus ausgeführt und abschließend die neue Stellgröße als PWM an den Wechselrichter ausgegeben werden.

Des Weiteren ist der Strom in der Speicherdrossel sehr stark abhängig vom Spannungsverlauf am Einspeisepunkt in das Wechselstromnetz. Kurze transiente Änderungen führen dazu, dass der Strom in der Speicherdrossel schnell wegläuft bzw. wegintegriert. Der Regler muss diesen Strom dann so schnell wie möglich wieder "einfangen" und auf seinen Sollwert regeln. Ein solcher Vorgang erfordert einige oder sogar viele PWM Zyklen. Aus Gründen der regelungstechnischen Stabilität kann das aber wiederum nur in endlich kleiner Zeit erfolgen.

Auch Resonanzen am Einspeisepunkt, die sich durch die zunehmende Durchdringung elektronischer Ein- und Ausspeiser wie z.B. Wechselrichter oder DC-Wallboxen am Netz einstellen können, müssen beherrscht werden. Diese Resonanzen können zu überlagerten Spannungsanteilen im kHz Bereich der Netzspannung führen, welche von den Wechselrichtern nicht mehr ausgeregelt werden können. Im ungünstigsten Fall kann es dabei zu Instabilitäten kommen, welche zur Abschaltung des Wechselrichters führen.

Eine weitere Herausforderung ist die Strommessung in der Speicherdrossel, also die Istwerterfassung der Regelung. Durch die die Schaltvorgänge im Wechselrichter kommt es, wie bereits erwähnt, zu einer taktfrequenten Welligkeit im Strom. Diese Welligkeit kann im zweistelligen Prozentbereich, bezogen auf den Nennstrom sein. Durch das Bestreben, die Speicherdrossel so klein wie möglich auszuführen, steigt diese taktfrequente Welligkeit immer weiter an. Das führt aber dazu, dass der Mikrocontroller/DSP seinen Abtastzeitpunkt, bezogen auf die PWM Frequenz, exakt einstellen muss. In diesem Zusammenhang spielen auch Treiberlaufzeiten, Totzeiten des Wechselrichters und weitere systematische Verzögerungen im Ansteuerzweig eine Rolle. In aktuellen Geräten mit z.B. 48kHz Schalfrequenz, muss der Abtastzeitpunkt auf wenige Nanosekunden genau ausgerichtet werden. Andernfalls würde ein falscher Istwert erfasst und der Controller regelt auf einen falschen Wert. Diese Problematik verschärft sich mit steigender Taktfrequenz. Auch der Stromsensor muss sehr breitbandig ausgeführt sein, um die taktfrequente Welligkeit im Strom noch exakt abbilden zu können. Solche breitbandigen Stromsensoren sind jedoch vergleichsweise teure Komponenten.

Das hier vorgestellte, neuartige Verfahren ermöglicht es, einen Großteil der beschriebenen Probleme bisheriger Verfahren zu beseitigen oder zu umgehen und dabei zusätzlich mit kostengünstigeren Komponenten, wie etwa noch deutlich kleineren Induktivitäten, auszukommen.

Dies wird erfindungsgemäß dadurch erreicht, dass die steuerbaren Schalter zur Erzeugung fortlaufender, dreieckförmiger, bei Strom Null beginnender und endender Strompulse des Stroms durch die Speicherdrossel angesteuert werden, welche Strompulse im zeitlichen Mittel am Einspeisepunkt den einzuspeisenden Wechselstrom ergeben.

Vorteilhafte Ausgestaltungen und Weiterbildungen des erfindungsgemäßen Verfahrens ergeben sich aus den Unteransprüchen und werden anhand des in der Zeichnung dargestellten Ausführungsbeispiels erläutert.

Es zeigen:
- Figur 1: ein Ersatzschaltbild eines Wechselrichters (für eine Phase)
- Figur 2: eine Darstellung des Stromverlaufs bei einem bekannten RegelVerfahren nach dem Stand der Technik
- Figur 3: eine Darstellung des Stromverlaufs bei dem erfindungsgemäßen Verfahren im sogenannten "Transition Mode"
- Figur 4: ein Stromverlaufsdiagramm mit Schaltsignalen und Schaltzuständen für positive Stromwerte I_{SD} im Transition Mode
- Figur 5: ein Stromverlaufsdiagramm mit Schaltsignalen und Schaltzuständen für negative Stromwerte I_{SD} im Transition Mode
- Figur 6: ein Stromverlaufsdiagramm mit Schaltsignalen und Schaltzuständen für positive Stromwerte I_{SD} bei fₘₐₓ - Begrenzung
- Figur 7: ein Stromverlaufsdiagramm mit Schaltsignalen und Schaltzuständen für negative Stromwerte I_{SD} bei fₘₐₓ - Begrenzung
- Figur 8: eine Logikschaltung zur Realisierung des fₘₐₓ - Betriebs

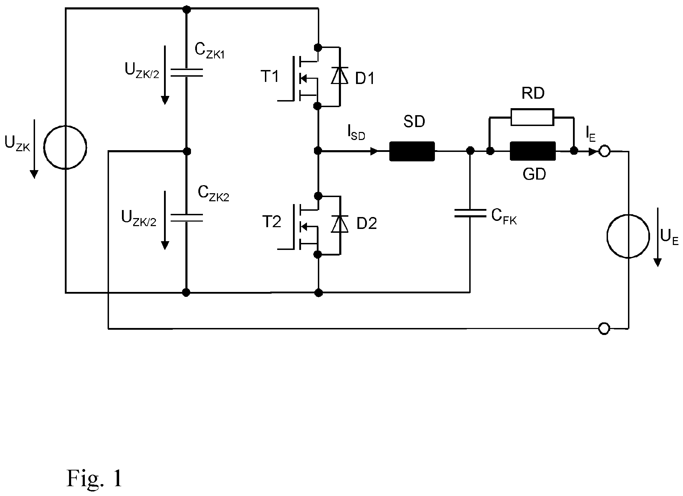

Wie in Fig. 1 zu sehen, weist der zur Durchführung des erfindungsgemäßen Verfahrens verwendete Wechselrichter eingangsseitig einen Gleichspannungs-Zwischenkreis ZK, zwei steuerbare Schalter T1, T2, eine Speicherdrossel SD und einen Filter-Kondensator C_{F} auf. Ausgangsseitig ist über eine Parallelschaltung einer Glättungsdrossel GD mit einem Dämpfungswiderstand RD ein erster Anschluss eines Einspeisepunkts E zum Einspeisen eines Wechselstroms in ein Wechselstromnetz verbunden. Parallel zu den in Reihe geschalteten steuerbaren Schaltern T1, T2 ist ein durch zwei identische Zwischenkreiskondensatoren C_{ZK1} und C_{ZK2} gebildeter kapazitiver Spannungsteiler geschaltet, dessen Mittelanzapfung mit einem zweiten Anschluss des Einspeisepunkts E verbunden ist, um an dem Einspeisepunkt E eine symmetrische Ausgangswechselspannung U_{E} zu erzeugen.

Die Steuerung des Wechselrichters erfolgt durch eine hier nicht dargestellte Steuereinrichtung in Gestalt etwa eines Mikrocontrollers oder eines digitalen Signalprozessors (DSP). Diese Steuereinrichtung umfasst auch Messmittel z.B. zur Spannungsmessung an verschiedenen Schaltungspunkten.

Das erfindungsgemäße Verfahren zum Betreiben dieses Wechselrichters basiert auf der Idee, diesen in einem sogenannten "Transition Mode" zu betreiben. Die Bezeichnung "Transition Mode" bezieht sich dabei auf den zeitlichen Verlauf des Stromes I_{SD} in der Speicherdrossel SD. Der Strom startet hierbei stets vom Wert Null und steigt betragsmäßig auf einen frei wählbaren Endwert an. Dieser Endwert wird durch eine Einschaltzeit tₒₙ des jeweils zugeordneten steuerbaren Schalters T1 oder T2 bestimmt, je nach gewünschtem Vorzeichen des einzuspeisenden Stromes. Mit dem Ausschalten dieses Schalters T1, T2, also mit dem Beginn seiner Ausschaltzeit t_{off}, beginnt der Strom I_{SD} betragsmäßig sofort wieder abzusinken. Damit sich der eben beschriebene Stromverlauf einstellen kann, muss die Zwischenkreisspannung stets größer als der Spitze/Spitze Wert der Netzspannung sein. Ein erneutes Einschalten des Schalters erfolgt aber frühestens dann, wenn der Strom I_{SD} wieder zu Null geworden ist. Somit ergibt sich eine zeitliche Abfolge dreieckförmiger, jeweils beim Stromwert Null beginnender und endender Strompulse durch die Speicherdrossel. Die besondere Eigenschaft des "Transition Mode" besteht nun darin, dass das erneute Einschalten des Schalters T1, T2 auch praktisch ohne Verzögerung erfolgt, wenn der Strom I_{SD} zu Null geworden ist, sich also quasi eine lückenlose Aneinanderreihung der dreieckförmigen Strompulse ergibt. Dies unterscheidet den "Transition Mode" etwa von dem später noch näher zu erläuternden, sogenannten "Lückbetrieb", bei dem der Strom I_{SD} erst für eine gewisse Zeit bei Null bleibt, bevor die nächste Einschaltzeit tₒₙ des steuerbaren Schalters T1, T2 beginnt.

Diese einfache Eigenschaft des erfindungsgemäßen Verfahrens hat sehr weitreichende Auswirkungen, wobei der wichtigste Punkt wohl der ist, dass die zuvor als Stand der Technik beschriebene Regelung nun durch eine rückkopplungsfreie Steuerung ersetzt werden kann. Von der Steuereinrichtung werden die Spannung U_{ZK} im Zwischenkreis und die Spannung U_{E} am Einspeisepunkt in Echtzeit gemessen. Eine solche Messung ist jedoch sehr viel einfacher als eine Strommessung, zumal keine nennenswerte taktfrequente Welligkeit existiert, welche einen exakten Abtastzeitpunkt erfordern würde. Darüber hinaus ist in der Steuereinrichtung der Induktivitätswert L der verwendeten Speicherdrossel SD hinterlegt. Aus diesen Informationen kann die Steuereinrichtung eine Einschaltzeit tₒₙ für den jeweiligen Schalter T1, T2 berechnen, die für den gewünschten Stromspitzenwert erforderlich ist. Der eigentlich gewünschte Stromsollwert I_{Soll} ist die Fläche unter der Kurve des tatsächlichen Stromverlaufs. Da dieser Stromverlauf dreieckförmig ist, muss der Stromspitzenwert dem doppelten Wert des eigentlichen Sollwerts I_{Soll} entsprechen.

Diese gerade beschriebenen Stromverläufe sind in Fig. 3 schematisch veranschaulicht, wobei der Sollwert des Stroms auch hier durch die glatte, sinusförmige Kurve und der Istwert durch die gezackte Linie dargestellt ist, die in diesem Falle jedoch nicht um den Sollwert herum pendelt, wie in Fig. 2, sondern eine Folge von Dreiecken mit der Nulllinie jeweils als Basis ausbildet. Auch diese Darstellung zeigt, wie auch schon Fig. 2 die Verläufe lediglich prinzipiell, da auch hier die Frequenzen des Drosselstromes I_{SD} in der Realität um ein Vielfaches höher sind. Sollte sich nun innerhalb einer Periodendauer t_{P}, die der Summe der Ein- und Ausschaltzeiten tₒₙ und t_{off} des jeweils aktiven Schalters T1 bzw. T2 und somit einem vollständigen Schaltungs-Zyklus entspricht, eine Änderung der Spannungen U_{ZK} bzw. U_{E} einstellen, welche zu einem unerwarteten Stromwert I_{SD} führt, so ist nur dieser eine Strompuls betroffen. Beim nächsten Nulldurchgang startet das Verfahren wieder mit "frischen" Zustandsgrößen. Diese Eigenschaft führt zu der sehr großen inhärenten Stabilität des Systems. Ein "Wegintegrieren" bzw. Weglaufen des Stromes I_{SD} wie beim Regelungsverfahren gemäß dem Stand der Technik kann hier nicht mehr auftreten.

Ein weiterer großer Vorteil des erfindungsgemäßen Verfahrens ist, dass die Induktivität L der Speicherdrossel SD um einen Faktor 10 bis 20 verkleinert werden kann. Dafür muss sie aber auf den doppelten Wert des maximal vorkommenden Stromsollwerts I_{Soll} ausgelegt werden, was aber in der Regel ein sehr viel kleineres Problem ist.

Ein besonderer Vorteil des erfindungsgemäßen Verfahrens ergibt sich auch aufgrund der Schaltverluste in den Leistungshalbleitern, die hier als steuerbare Schalter T1, T2 eingesetzt sind. Grundsätzlich fallen bei jedem Ein- und Ausschaltvorgang in einem Leistungshalbleiter Verluste dann. Diese sind in erster Näherung proportional zur Zwischenkreisspannung U_{ZK} und dem Augenblickswertes des zu schaltenden Stromes I_{SD}. Da bei dem erfindungsgemäßen Verfahren aber immer stromlos eingeschaltet wird, fallen die Einschaltverluste komplett weg. Dafür muss allerdings hier der Strom I_{SD} bei höheren Augenblickswerten ausgeschaltet werden. Da aber das Verhältnis von Ein- und Ausschaltverlusten bei realen SiC MOSFETs bei etwa 3:1 liegt, ergibt sich in Summe sogar noch ein Vorteil.

Die Steuerung bei dem erfindungsgemäßen Verfahren unterscheidet sich signifikant von demjenigen bei einem kontinuierlich geregelten Wechselrichter. Während ein kontinuierlich geregelter Wechselrichter mit einer einfachen PWM mit entsprechendem Regelalgorithmus angesteuert werden kann, erfordert das erfindungsgemäße Verfahren eine komplexe Steuerung der Ein- und Ausschaltzeiten tₒₙ, t_{off} der steuerbaren Schalter T1, T2, die eng mit der Peripherie des als Steuereinrichtung verwendeten Mikrocontrollers bzw. DSP verzahnt ist.

Ein weiterer sehr großer Vorteil des erfindungsgemäßen Verfahrens ist auch der Wegfall der Notwendigkeit einer breitbandigen Strommessung. Dies bedeutet, wie bereits zuvor erwähnt, dass auf die dafür erforderlichen, kostspieligen Stromsensoren verzichtet werden kann. Die Speicherdrossel SD trägt lediglich eine Sensorwicklung, mit der der Stromnulldurchgang ermittelt werden kann. Genauer gesagt wird hier der Nulldurchgang der Stromänderung ermittelt, was bedeutet das das hierdurch mittels eines Komparators I₀-K erzeugte Signal I₀ bei jedem lokalen Maximum oder Minimum des Stroms I_{SD} von "High" zu "Low" oder umgekehrt wechselt. Mit diesem Signal I₀ wird die intern in der Steuereinrichtung vorberechnete Ausschaltzeit t_{off} kalibriert, sodass unvermeidliche Messfehler in den Spannungsmessungen von U_{ZK} und U_{E} und bei der Induktivität L der Speicherdrossel SD ausgeglichen werden können. Eine solche Sensorwicklung kostet nur wenige Cent und ist sehr einfach auszuwerten. Die Spannungsmessungen von U_{ZK} und U_{E} müssen ist Echtzeit ausgeführt werden, damit zu Beginn einer neuen Periode stets aktuelle Messwerte zur Verfügung stehen. Im aktuellen System werden in einem Zeitraster von 2µs zyklisch neue Messwerte ermittelt und der Steuerung zur Verfügung gestellt.

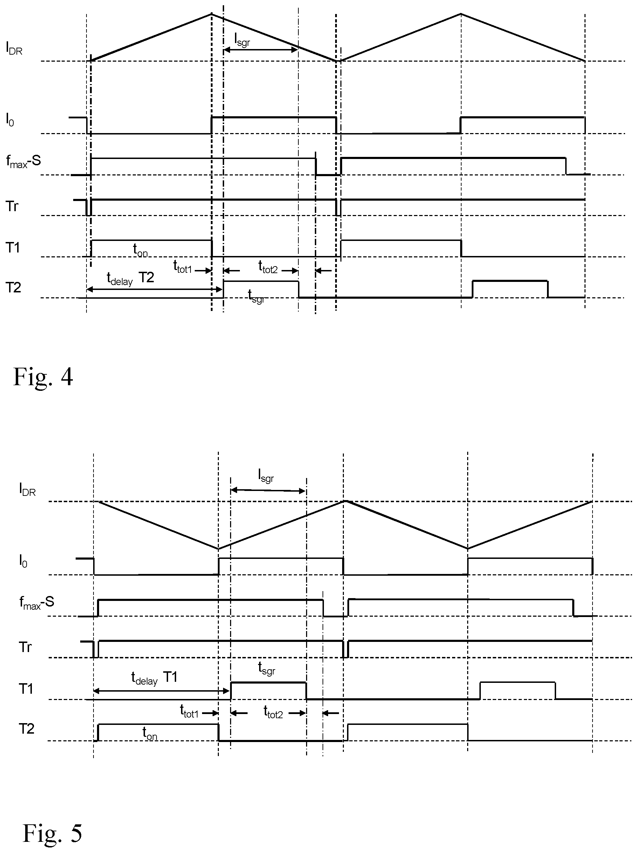

In den Fig. 4 und Fig. 5 ist der Zusammenhang zwischen dem Strom I_{SD} durch die Speicherdrossel SD, den Schaltzuständen On, Off der steuerbaren Schalter T1 und T2 und dem Signal I₀, das den Stromänderungsnulldurchgang anzeigt, jeweils für positive und negative Stromwerte I_{SD} dargestellt.

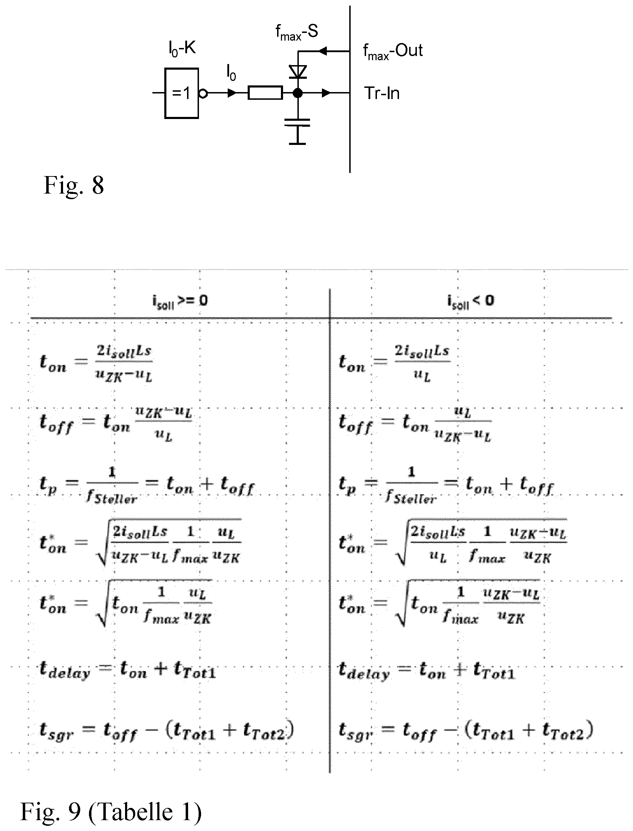

Jeder neue Schaltungs-Zyklus beginnt mit einem Triggersignal Tr in Form einer fallenden Flanke an einem zugeordneten Eingang Tr - In der Steuereinrichtung. Für die in Fig. 4 dargestellten positiven Stromwerte I_{SD} erfolgt sofort mit dem Triggersignal Tr das Einschalten des ersten Schalters T1 beim Stromwert Null. Während einer ersten Einschaltzeit tₒₙ von T1 steigt der Strom I_{SD} linear bis zu dem gewünschten Maximalwert an. Die Einschaltzeit tₒₙ wird gemäß der Tabelle 1 (Fig. 9, links, i>0) entsprechend dem gewünschten Maximalwert I_{Soll} des Stromes I_{SD} berechnet. Für die Berechnung von tₒₙ, wie auch der weiteren Steuerzeiten müssen taktfrequent eine Reihe von Gleichungen berechnet werden. Generell gilt für das erfindungsgemäße Verfahren, dass die Zwischenkreisspannung U_{ZK} immer größer als die Spannung U_{E} am Einspeisepunkt E sein muss. Zu Beginn jedes Zyklus liegen die aktuellen Messwerte von U_{ZK} und U_{E} vor. Daraus kann die Steuereinrichtung dann zusammen mit der Sollwertvorgabe I_{Soll} die Zeiten tₒₙ und t_{off} berechnen. Die Summe dieser beiden Zeiten ist die voraussichtliche Periodendauer t_{P}.

Mit dem Ausschalten von T1 am Ende von tₒₙ beginnt der Strom I_{SD} sofort wieder zu fallen, und wird für eine erste kurze Totzeit tₜₒₜ₁ von der Freilaufdiode D2 getragen und dann durch Einschalten des zweiten Schalters T2 für eine auch als Synchrongleichrichtungszeit bezeichnete zweite Einschaltzeit t_{sgr} von diesem übernommen. Nach Ablauf der Einschaltzeit t_{sgr} wird T2 rechtzeitig vor dem Erreichen des Stromwerts Null und dem damit verbundenen Wechsel des Signals I₀ von High zu Low wieder ausgeschaltet, so dass für eine zweite Totzeit tₜₒₜ₂ der Strom I_{SD} wieder von D2 getragen wird. Mit dem nächsten Triggersignal Tr und dem damit verbundenen erneuten Einschalten von T1 beginnt dann der nächste Schaltungs-Zyklus mit neu berechneten Schaltzeiten.

Der Grund für die Einhaltung der allgemein als Totzeit bezeichneten, in diesem Fall durch die ersten und zweiten Totzeiten tₜₒₜ₁ und tₜₒₜ₂ realisierten kurzen Zeiträume, in denen sowohl T1 als auch T2 ausgeschaltet sind, und der Strom I_{SD} jeweils von der Freilaufdiode D2 getragen wird, ist die endlich kurze Schaltgeschwindigkeit realer Leistungshalbleiter. Bedingt durch diese ist es nämlich unbedingt zu vermeiden, dass in einem Wechselrichter die Schalter T1 und T2 gleichzeitig eingeschaltet sind, weil das zu einem direkten Kurzschluss im Zwischenkreis ZK führen würde.

In Systemen mit fester Schaltfrequenz sind diese ersten und zweiten Totzeiten tₜₒₜ₁ und tₜₒₜ₂ sehr leicht einzuhalten, weil von vornherein bekannt ist, wie lange die Periodendauer t_{P} ist und somit die Einschaltdauer von T1 bzw. T2 entsprechend begrenzt werden kann. Beim Transition Mode Verfahren ist die Einhaltung der Totzeiten deutlich schwieriger, weil die Periodendauer t_{P} variabel ist, und man in einer laufenden Periode noch gar nicht weiß, wann diese zu Ende ist. Dennoch müssen auch hier die Totzeiten zwingend eingehalten werden, ohne dabei das Wirkprinzip des Transition Modes einzuschränken. Aus diesem Grunde ist die Einhaltung und Erzeugung der Totzeiten deutlich komplexer und schwieriger.

Die Freilaufdioden D1 und D2 sind im Falle von SiC MOSFETs durch eingebaute Bodydioden gebildet. Diese Bodydioden sind dynamisch sehr gut, d.h. sie weisen so gut wie keine Reverse Recovery Ladung auf. Im statischen Betrieb sind diese Dioden aber leider sehr schlecht, da sie typische Flussspannungen im Bereich von vier bis fünf Volt aufweisen. Dies macht die oben beschriebene, auch als Synchrongleichrichtung bezeichnete Vorgehensweise zwingend erforderlich, bei der der Strom nur für eine erste kurze Totzeit tₜₒₜ₁ von der Freilaufdiode D2 getragen werden muss und dann durch Einschalten des zweiten Schalters T2 für eine Synchrongleichrichtungszeit t_{sgr} von diesem übernommen wird, um die Bodydiode zu entlasten. Da SiC MOSFET rückwärts leitend sind, kann und muss damit die Verlustleistung reduziert werden. Für T2 liegt die auch als Delayzeit t_{delay} bezeichnete Zeit, bis dieser eingeschaltet wird bei tₒₙ +tₜₒₜ₁, d.h. erst wenn die Einschaltzeit tₒₙ abgelaufen und auch die Totzeit tₜₒₜ₁ eingehalten worden ist, wird T2 leitend. Die Totzeit tₜₒₜ₁ sollte so klein wie möglich gewählt werden, weil hier der Augenblickswert des Stromes I_{SD} noch sehr hoch ist. Somit kann mit einem Delaytimer die Totzeit tₜₒₜ₁ sichergestellt werden. Die Realisierung der zweiten Totzeit tₜₒₜ₂ ist ein wenig schwieriger, da nicht bekannt ist, wann mit der fallenden Flanke des Triggersignals Tr am Triggereingang Tr-In der neue Schalt-Zyklus beginnt. Die Einhaltung dieser zweiten Totzeit tₜₒₜ₂ wird, wie im Weiteren näher beschrieben, über ein als "fₘₐₓ-Signal" bezeichnetes, über eine in Fig. 8 gezeigte Logikschaltung mit dem Signal I₀ zur Bildung des Triggersignals Tr verknüpftes Signal fₘₐₓ-S sichergestellt.

Der in Fig. 5 dargestellte Ablauf für negative Stromwerte erfolgt analog, wobei die Rollen des ersten Schalters T1 und des zweiten Schalters T2 vertauscht sind, d.h. jeder Zyklus beginnt hier mit dem Einschalten des zweiten Schalters T2 beim Stromwert Null für die Einschaltdauer tₒₙ, die in diesem Fall gemäß der Tabelle 1 (Fig. 9, rechts, i<0) entsprechend dem gewünschten negativen Maximalwert I_{Soll} des Stromes I_{SD} berechnet wird.

Eine grundsätzliche Eigenschaft des erfindungsgemäßen Verfahrens besteht darin, dass bei diesem die Schaltfrequenz f nicht fixiert ist, wie bei einer PWM, sondern variabel. Die jeweils aktuelle Schaltfrequenz f entspricht dem Kehrwert der aktuellen Periodendauer t_{P}, die ja die Summe der Ein- und Ausschaltzeiten tₒₙ und t_{off} ist, welche selbst wiederum abhängig von dem gewünschten Stromsollwert I_{Soll} sind. Je kleiner der vorgegebene Stromsollwert I_{Soll} wird, umso kürzer werden auch die Ein- und Ausschaltzeiten tₒₙ und t_{off}, so dass die erforderliche Schaltfrequenz f gegen unendlich streben würde, wenn dieser Stromsollwert I_{Soll} gegen Null geht.

Reale Leistungsschalter können aber nur endlich hohe Schaltfrequenzen abbilden, wobei mit aktuell verfügbaren Komponenten bevorzugt ein Bereich zwischen etwa 40 und 150 kHz genutzt wird. Da selbstverständlich aber auch kleine Sollwerte einstellbar sein müssen, sieht das erfindungsgemäße Verfahren hier eine als "fₘₐₓ - Begrenzung" bezeichnete Vorgehensweise vor, bei der ab einer frei definierbaren maximalen Schaltfrequenz fₘₐₓ von beispielsweise 150kHz, ein künstlich herbeigeführter, zuvor bereits kurz angesprochener "Lückbetrieb" eingenommen wird, um die Leistungsschalter frequenzmäßig nicht zu überfahren.

Da bei diesem Lückbetrieb der Strom I_{SD} erst für eine gewisse Zeit bei Null bleibt, bevor die nächste Einschaltzeit tₒₙ des jeweils aktiven steuerbaren Schalters T1, T2 beginnt, ist eine Anpassung in der Berechnung der Einschaltzeit tₒₙ erforderlich, die seitens der Steuereinrichtung entsprechend vorgenommen wird.

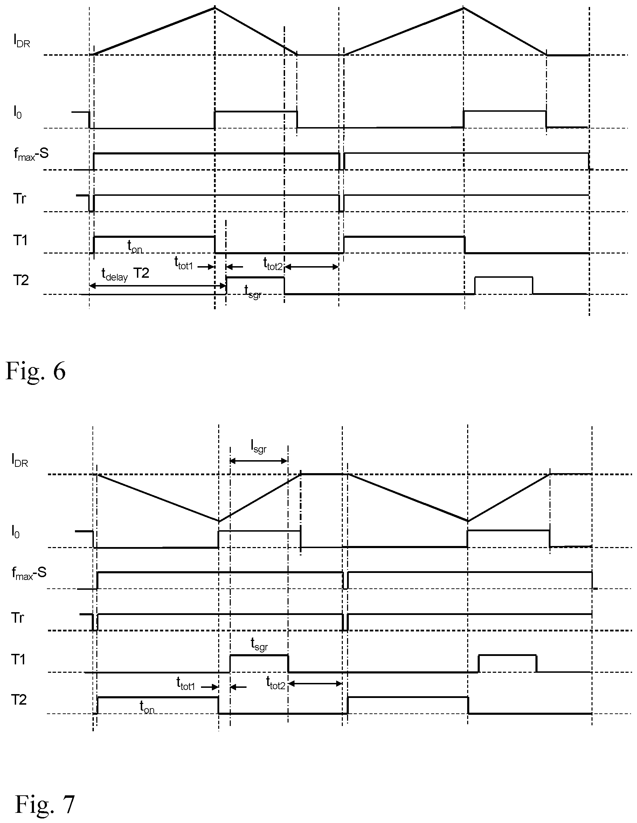

Die Fig. 6 zeigt den Ablauf wiederum für positive Stromwerte beim Wirken der fₘₐₓ - Begrenzung. Im Falle, dass der einzustellende Stromsollwert I_{Soll} im Transition Mode eine Schaltfrequenz f erforderlich machen würde, die über dem festgelegten Wert fₘₐₓ liegt, wird nicht, wie zuvor geschildert, sofort mit dem Erreichen des Stromwerts Null und dem damit verbundenen Wechsel des Signals I₀ von High zu Low ein neues Triggersignal Tr und damit verbunden ein erneutes Einschalten von T1 ausgelöst. Dies geschieht jetzt erst in dem Moment, in dem auch ein weiteres Signal, nämlich fₘₐₓ-S von High zu Low wechselt.

Nach dem Triggersignal Tr wird dazu neben der Ausgabe des Einschaltsignals für T1 für die Einschaltzeit tₒₙ auch sofort ein Signal fₘₐₓ-S auf High gesetzt. Dieses Signal fₘₐₓ-S wird, wie in Fig. 8 gezeigt, an einem Ausgang fₘₐₓ-Out der Steuereinrichtung ausgegeben und auf den Triggereingang Tr-In der Steuereinrichtung gegeben, weswegen dieser dann sofort wieder auf logisch High geht. Das Signal fₘₐₓ-S ist über die in Fig. 8 gezeigte Logikschaltung mit dem von einem Komparator I₀-K erzeugten Signal I₀ so verknüpft, dass ein neues Triggersignal Tr erst dann gegeben wird, wenn sowohl das Signal I₀ als auch das Signal fₘₐₓ-S Low sind.

Mit dem Signal fₘₐₓ-S wird somit die Einhaltung der zweiten Totzeit tₜₒₜ₂ sichergestellt. Solange fₘₐₓ-S auf High liegt, können keine weiteren Triggersignale Tr auf das System gegeben werden, da dieses auf fallende Flanken reagiert. Somit kommt dem Signal fₘₐₓ-S grundsätzlich eine Doppelfunktion zu. Zum einen wird mit diesem Signal die Frequenz f nach oben hin begrenzt, was aufgrund der endlichen Schaltzeiten der SiC MOSFET erforderlich ist. Darüber hinaus dient das Signal fₘₐₓ-S dazu, die Totzeit tₜₒₜ₂ sicherzustellen. Dabei wird auf dem Signal fₘₐₓ-S die voraussichtliche Periodendauer t_{P} ausgegeben. Der Einschaltzeitpunkt und die Einschaltdauer des Schalters T2 ist der Steuerung bekannt und befindet sich stets innerhalb des Zeitraums t_{P}.

In der Zeit zwischen dem Wechsel des Signals I₀ und dem Wechsel des Signals fₘₐₓ-S verharrt der Drosselstrom I_{SD}, wie in dem Diagramm zu sehen, auf der Nulllinie. Der in Fig. 7 dargestellte Ablauf für negative Stromwerte erfolgt auch hier wieder völlig analog.

Die Steuerung prüft für jeden Zyklus, welche Periodendauer t_{P} bzw. Frequenz f sich mit den aktuellen Spannungswerten für U_{ZK} und U_{E} und dem Sollwert des Stromes ergeben würde. Liegt diese Frequenz f unter dem frei wählbaren Limit fₘₐₓ (hier 150kHz), dann werden die berechneten Werte direkt ausgegeben. Sollte sich jedoch eine Frequenz f einstellen, welche über dem Limit fₘₐₓ liegt, erfolgt eine Neuberechnung der Einschaltzeiten von T1 und T2, wobei hier dann der künstlich herbei geführte Lückbetrieb und damit die Verlängerung der Periodendauer t_{P} berücksichtigt wird. Beim Wirken der fₘₐₓ -Begrenzung werden die in Tabelle 1 (Fig. 9) als Einschaltzeiten tₒₙ* angegebenen Größen verwendet, aus denen dann die weiteren Zeiten wie gehabt berechnet werden.

Im realen Betrieb stellt sich über weite Teile der Grundfrequenz von 50Hz bzw. 60Hz dieser Lückbetrieb mit wirksamer fₘₐₓ -Begrenzung ein. Insofern ist dieser Betriebsfall ganz wesentlich für den Gesamtbetrieb des Systems.

## Patentansprüche

1. Verfahren zum Betreiben eines Wechselrichters mit einem Gleichspannungs-Zwischenkreis (ZK), zumindest zwei steuerbaren Schaltern (T1, T2), einer Speicherdrossel (SD) und einem Filter-Kondensator (C), zum Einspeisen eines Wechselstroms in ein Wechselstromnetz an einem Einspeisepunkt (E), **dadurch gekennzeichnet, dass** die steuerbaren Schalter (T1, T2) zur Erzeugung fortlaufender, dreieckförmiger, jeweils beim Stromwert Null beginnender und endender Strompulse des Stroms (I_{SD}) durch die Speicherdrossel (SD) angesteuert werden, welche Strompulse im zeitlichen Mittel am Einspeisepunkt (E) den einzuspeisenden Wechselstrom (I_{E}) ergeben.

2. Verfahren nach Anspruch 1, **dadurch gekennzeichnet, dass** für jeden Strompuls ein Sollwert (I_{Soll}) vorgegeben wird, und dass Ein- und Ausschaltzeiten (tₒₙ, t_{off}) für die steuerbaren Schalter (T1, T2) aus diesem Sollwert (I_{Soll}), der bekannten Induktivität (L) der Speicherdrossel (SD) und aktuell ermittelten Messgrößen des Wechselrichters berechnet werden.

3. Verfahren nach Anspruch 2, **dadurch gekennzeichnet, dass** die aktuell ermittelten Messgrößen des Wechselrichters die Spannung (U_{ZK}) des Gleichspannungs-Zwischenkreises (ZK) und die Spannung (U_{E}) am Einspeisepunkt (E) umfassen.

4. Verfahren nach einem der Ansprüche 1 bis 3, **dadurch gekennzeichnet, dass** die Schaltfrequenz (f) der Strompulse variabel ist, und abhängig von einem jeweils vorgegebenen Stromsollwert (I_{Soll}) in einem Bereich zwischen etwa 40 und 150 kHz liegt.

5. Verfahren nach einem der Ansprüche 1 bis 4, **dadurch gekennzeichnet, dass** eine maximale Schaltfrequenz (fₘₐₓ) festgelegt ist, und dass die tatsächliche Schaltfrequenz (f) der Strompulse diese nicht überschreitet.

6. Verfahren nach Anspruch 5, **dadurch gekennzeichnet, dass** die Strompulse bei einer Schaltfrequenz (f) unterhalb der festgelegten maximalen Schaltfrequenz (fₘₐₓ) unmittelbar lückenlos aufeinanderfolgen, und dass bei der maximalen Schaltfrequenz (fₘₐₓ) ein Lückbetrieb erfolgt, bei dem der Strom (I_{SD}) nach jedem Strompuls erst für eine gewisse Zeit bei Null bleibt, bevor der nächste Strompuls beginnt.
